# EUROPÄISCHE PATENTSCHRIFT

(11) **EP 4 016 226 B1**
(45) Veröffentlichungstag und Bekanntmachung des Hinweises auf die Patenterteilung: **11.10.2023**
(21) Anmeldenummer: 21211301.3
(22) Anmeldetag: 30.11.2021
(51) Int. Cl.: G05D 1/00

(54) **VERFAHREN ZUM BETRIEB EINES MOBILEN, SELBSTFAHRENDEN GERÄTS**
METHOD FOR OPERATING A SELF-PROPELLED MOBILE DEVICE
PROCÉDÉ D'EXPLOITATION D'UN APPAREIL MOBILE AUTONOME

(30) Priorität: 17.12.2020 DE 102020216124
(43) Veröffentlichungstag der Anmeldung: 22.06.2022
(73) Patentinhaber: BSH Hausgeräte GmbH, 81739 München (DE)
(72) Erfinder: Daniel, Kristina, 97616 Bad Neustadt (DE); Schnitzer, Frank, 97616 Bad Neustadt (DE); Geis, Julius, 97688 Bad Kissingen (DE)

(56) Entgegenhaltungen:
- DE-A1-102015 119 501
- DE-A1-102017 104 428

## Beschreibung

Die Erfindung betrifft ein Verfahren zum Betrieb eines mobilen, selbstfahrenden Geräts, insbesondere eines Bodenreinigungsgeräts zur autonomen Bearbeitung von Bodenflächen wie ein Saug- und/oder Kehr- und/oder Wischroboter. Zudem betrifft die Erfindung ein Bodenreinigungssystem mit einem derartigen mobilen, selbstfahrenden Gerät.

Mobile, selbstfahrende Geräte, insbesondere Saugroboter, sind herkömmlich bekannt. Bei derartigen Saugrobotern stellen das Navigieren und Manövrieren gerade in engen Räumlichkeiten und/oder schmalen Gängen eine Herausforderung dar. Für den Nutzer ist oftmals nicht offensichtlich, welche Bereiche des zu saugenden Raums von dem mobilen, selbstfahrenden Gerät beispielsweise aufgrund von Engstellen oder Hindernissen nicht mehr befahren werden können. Zudem ist es meist für den Nutzer nicht ersichtlich, ob in der geplanten Reinigungsroute die Gefahr besteht, dass sich das mobile, selbstfahrende Gerät aufgrund von zu engen Platzverhältnissen festfährt und/oder stecken bleibt. Bisher ist bei derartigen Engstellen oder Hindernissen nach dem Entdecken solcher Engstellen oder Hindernisse erforderlich, beispielsweise eine sogenannte No-Go-Zone zu erstellen oder mittels "Try and Error"-Methode die Hindernisse wie beispielsweise Möbel zu verrücken, bis die Engstelle für das mobile, selbstfahrende Gerät behoben ist.

Bisherige bekannte technische Lösungen erlauben es also, bei schwer zugänglichen Bereichen eine No-Go-Zone zu erstellen. Das kann beispielsweise mittels einer App digital in einer von dem mobilen, selbstfahrenden Gerät bereitgestellten Umgebungskarte des zu bearbeitenden Bodenbearbeitungsbereichs oder durch Aufstellen von Infrarot-Türmen oder dem Verwenden von Magnetbändern umgesetzt werden.

Ist eine Engstelle in dem zu bearbeitenden Bodenbearbeitungsbereich so schmal, dass das mobile, selbstfahrende Gerät gar nicht erst in diesen Engstellen-Bereich einfahren kann, so ist keine No-Go-Zone nötig, da das mobile, selbstfahrende Gerät aufgrund von Nicht-Einfahrt nicht stecken bleiben kann. Jedoch kann nachteilig das mobile, selbstfahrende Gerät diesen Engstellen-Bereich in diesem Fall nicht reinigen, womit eine manuelle Nachreinigung durch den Nutzer notwendig wird.

Das Dokument DE 10 2015 119 501 A1 beschreibt ein Verfahren für einen Robotereinsatz, umfassend das Analysieren einer Karte eines Robotereinsatzgebietes mittels eines Prozessors zur Erkennung eines Bereichs mit einem Cluster von Hindernissen, um eine automatische Aufteilung der Karte zu realisieren. Dazu werden Hindernisse detektiert sowie deren Größe und Position in der Karte mittels an dem Roboter angeordneten Sensoren bestimmt.

Das Dokument DE 10 2017 104 428 A1 beschreibt ein automatisches Erzeugen von Sperrgebieten für schwer navigierbare Bereiche in einer elektronischen Karte, die ein Robotereinsatzgebiet eines autonom mobilen Roboters repräsentiert.

Aufgabe der vorliegenden Erfindung ist es, die oben erörterten Nachteile im Betriebsverfahren eines mobilen, selbstfahrenden Geräts zu beheben, und insbesondere nicht reinigbare Engstellen in einem zu bearbeitenden Bodenbearbeitungsbereich vorab zu vermeiden, sowie ein Bodenreinigungssystem bereitzustellen, das ein derartiges Verfahren umsetzen kann.

Diese Aufgabe wird durch ein Verfahren zum Betrieb eines mobilen, selbstfahrenden Geräts, insbesondere eines Bodenreinigungsgeräts zur autonomen Bearbeitung von Bodenflächen, mit den Merkmalen des Anspruchs 1 und durch ein Bodenreinigungssystem mit den Merkmalen des Anspruchs 8 gelöst. Vorteilhafte Ausgestaltungen und Weiterbildungen sind Gegenstand der Unteransprüche.

Erfindungsgemäß umfasst ein Verfahren zum Betrieb eines mobilen, selbstfahrenden Geräts, insbesondere Bodenreinigungsgerät zur autonomen Bearbeitung von Bodenflächen wie ein Saug- und/oder Kehr- und/oder Wischroboter, folgende Verfahrensschritte:
- Durchführen einer Explorationsfahrt des mobilen, selbstfahrenden Geräts in einem vorgesehenen Bodenbearbeitungsbereich,
- Detektieren von Engstellen mittels einer Detektionseinrichtung und Erstellen einer Umgebungskarte des Bodenbearbeitungsbereichs,
- Ermitteln von Hindernissen, die die Engstellen hervorrufen, und Darstellen der Engstellen und/oder Hindernisse in der Umgebungskarte, und
- Anzeigen von Maßnahmen zum Beheben der Engstellen, wobei die Maßnahmen eine Aufstellhilfe für Hindernisse, insbesondere Einrichtungsgegenstände und/oder Möbel, beinhalten.

Die erfindungsgemäße Lösung zeichnet sich dadurch aus, dass das Bodenreinigungsgerät selbst erkennt und dem Nutzer mitteilt, in welchen Bereichen des zu bearbeitenden Bodenbearbeitungsbereichs Engstellen vorhanden sind. Gleichzeitig wird dem Nutzer mitgeteilt, welche Maßnahmen zum Beheben der ermittelten Engstellen möglich beziehungsweise notwendig sind, wie beispielsweise das Verschieben von Möbeln. Die Erfindung setzt also eine digitale Aufstellhilfe für Einrichtungsgegenstände in einer Wohnung, insbesondere in einem Bodenbearbeitungsbereich, um.

Mittels einer Explorationsfahrt, beziehungsweise Erkundungsfahrt, legt das mobile, selbstfahrende Gerät eine Umgebungskarte des zu bearbeitenden Bodenbearbeitungsbereichs an. Bereits bei dieser ersten Explorationsfahrt kann das mobile, selbstfahrende Gerät den Nutzer beispielsweise durch empirisch ermittelte Werte und Fahrverhalten auf mögliche Engstellen in der interaktiven Umgebungskarte hinweisen, sodass der Nutzer direkt auf diese Engstellen aufmerksam gemacht wird. Gleichzeitig ermittelt das mobile, selbstfahrende Gerät, welche Hindernisse, beispielsweise Gegenstände, Möbel oder ähnliches, diese Engstellen hervorrufen. Zusätzlich gibt das mobile, selbstfahrende Gerät in der Umgebungskarte insbesondere digitale Empfehlungen ab, welche Maßnahmen notwendig sind, um die ermittelten Engstellen zu beheben, sodass dem mobilen, selbstfahrenden Gerät der Zugang zu den ermittelten Engstellen gewährleistet und eine Reinigung hier möglich wird.

Sollte das mobile, selbstfahrende Gerät keine Hindernisse lokalisieren können, die die ermittelte Engstelle hervorrufen, kann das mobile, selbstfahrende Gerät zumindest auf die Engstelle verweisen und dem Nutzer anraten, eventuelle Hindernisse im Umkreis dieser Engstelle zu beseitigen, sodass dem mobilen, selbstfahrenden Gerät ein Zugang ermöglicht wird.

Durch das erfindungsgemäße Verfahren kann dem Nutzer mit Vorteil eine meist lästige "Try and Error"-Methode erspart werden, um den zu bearbeitenden Bodenbearbeitungsbereich für das mobile, selbstfahrende Gerät möglichst vollständig zugänglich zu machen und insbesondere ein Festsetzen des mobilen, selbstfahrenden Geräts aufgrund von Engstellen und darauf basierend einen Abbruch des Reinigungsvorgangs zu verhindern. Engstellen können insbesondere mit Vorteil einfach behoben werden, womit grundsätzlich eine geringere Anzahl an No-Go-Zonen auftreten, wodurch die Reinigungsabdeckung des zu bearbeitenden Bodenbearbeitungsbereichs erhöht und der manuelle Reinigungsaufwand des Nutzers verringert werden kann, was die Nutzerzufriedenheit mit Vorteil erhöht. Aufgrund der geringeren Anzahl an in der Umgebungskarte gespeicherten und angezeigten No-Go-Zonen verschlankt sich vorteilhafterweise die Umgebungskarte mit allen angegeben Informationen. Dadurch wird die Umgebungskarte mit Vorteil übersichtlicher, womit sich das Handling für den Nutzer vereinfacht.

Zudem tritt mit Vorteil eine Zeitersparnis für den Nutzer beim Aufstellen von Einrichtungsgegenständen und Möbeln und dem anschließenden Neuerlernen der Umgebungskarte durch das direkte Feedback des mobilen, selbstfahrenden Geräts über die verwendete Aufstellposition auf. Die Interaktion zwischen mobilem, selbstfahrenden Gerät und Nutzer erhöht sich mit Vorteil, was sich wiederum in der Nutzerzufriedenheit wiederspiegelt.

Unter einem mobilen, selbstfahrenden Gerät ist insbesondere ein Bodenreinigungsgerät, beispielsweise Reinigungs- oder Rasenmähergeräte, zu verstehen, welche insbesondere im Haushaltsbereich Bodenflächen oder Rasenflächen autonom bearbeiten. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb oder Rasenmäherbetrieb) bevorzugt ohne oder mit möglichst wenig Benutzereingriff. Beispielsweise verfährt das Gerät selbsttätig in einen vorgegebenen Raum, um entsprechend einer vorgegebenen und einprogrammierten Verfahrensstrategie den Boden abzureinigen.

Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Unter einem Bodenbearbeitungsbereich ist jeglicher räumliche Bereich zu verstehen, der zur Bearbeitung, insbesondere Reinigung vorgesehen ist. Das kann beispielsweise ein einzelner (Wohn)raum oder eine ganze Wohnung sein. Auch lediglich Bereiche eines (Wohn)raums oder einer Wohnung, die zur Reinigung vorgesehen sind, können darunter verstanden werden.

Als Hindernisse sind jegliche Objekte zu verstehen, die im Bodenbearbeitungsbereich angeordnet sind und die Bearbeitung durch das mobile, selbstfahrende Gerät beeinflussen, insbesondere behindern und/oder stören wie beispielsweise Möbel, Wände, Vorhänge, Teppiche und ähnliches.

Unter einer Engstelle ist insbesondere jeglicher Bereich im Bodenbearbeitungsbereich zu verstehen, der für das mobile, selbstfahrende Gerät nicht frei zugänglich ist, beispielsweise aufgrund einer zu kleinen Ausdehnung in Länge, Breite und/oder Höhe, und/oder bei Anfahren des Bereichs ein Festsetzen des mobilen, selbstfahrenden Geräts zur Folge hat.

Unter einer Detektionseinrichtung ist jegliche Einrichtung zu verstehen, die dazu geeignet ist, Hindernisse bevorzugt zuverlässig zu detektieren. Diese ist vorzugsweise sensorbasiert und/oder kamerabasiert.

Unter einer Umgebungskarte ist insbesondere jegliche Karte zu verstehen, die geeignet ist, die Umgebung des Bodenbearbeitungsbereichs mit all seinen Hindernissen darzustellen. Beispielsweise zeigt die Umgebungskarte den Bodenbearbeitungsbereich mit den darin enthaltenen Hindernissen und Wänden skizzenartig an.

Unter einer Position ist jeglicher räumliche, insbesondere dreidimensionale Ort im Bodenbearbeitungsbereich zu verstehen. Eine Position ist hier insbesondere im räumlichen Sinne zu verstehen.

Die Maßnahmen zum Beheben der Engstellen zielen insbesondere auf ein zugängliches Anfahren des mobilen, selbstfahrenden Geräts und/oder auf ein möglichst geringes Risiko des Festsetzens des mobilen, selbstfahrenden Geräts ab. Die Bewertung erfolgt dabei vorzugsweise automatisch anhand dieser Kriterien. Beispielsweise können über die Maßnahmen Engstellen und hierzu vorzugsweise alle Möglichkeiten zum Beheben der Engstellen angezeigt werden.

Die Umgebungskarte mit den Engstellen, Hindernissen und Maßnahmen wird vorzugsweise in einer App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere eine App, insbesondere eine Bedienungs- und/oder Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte sowie jegliche Hindernisse und Engstellen mit den jeweiligen Maßnahmen an.

Erfindungsgemäß beinhalten die Maßnahmen eine Aufstellhilfe für Hindernisse, insbesondere Einrichtungsgegenstände und/oder Möbel. Die Maßnahmen sind insbesondere als digitale Aufstellhilfe in einer Wohnung des Nutzers umgesetzt. Hierdurch kann dem mobilen, selbstfahrenden Gerät Zugang zu allen möglichen Bereichen der Wohnung des Nutzers gewährt werden. Engstellen, die für das mobile, selbstfahrende Gerät aufgrund einer zu geringen Höhe, Breite oder Länge nicht passierbar sind, können mittels der Aufstellhilfe reduziert und vorteilhafterweise verhindert werden.

Bei einer vorteilhaften Ausführungsform beinhalten die Maßnahmen eine Empfehlung für ein Versetzen und/oder Verschieben von Hindernissen, insbesondere Einrichtungsgegenständen und/oder Möbeln. Durch das empfohlene Versetzen und/oder Verschieben können Engstellen, die durch die entsprechenden Hindernisse hervorgerufen werden, behoben werden. Eine größtmöglichste Reinigung des zu bearbeitenden Bodenbearbeitungsbereichs mittels des mobilen, selbstfahrenden Geräts ermöglicht sich so mit Vorteil.

Bei einer weiteren vorteilhaften Ausführungsform beinhaltet die Empfehlung eine genaue Angabe, insbesondere Längenangabe, die ein minimal notwendiges Versetzen und/oder Verschieben angibt, um die jeweilige Engstelle zu beheben. Insbesondere wird bei den Maßnahmen nicht nur auf mögliche Engstellen hingewiesen, sondern die Maßnahmen beinhalten Empfehlungen mit genauen Angaben, wie diese Engstellen behoben werden können. Beispielsweise geben die Maßnahmen visuell eine Engstelle an mit der Empfehlung, das angrenzende Hindernis, beispielsweise einen Schrank, um eine entsprechend angegebene Strecke nach links, rechts, vor und/oder zurück zu verschieben, damit das mobile, selbstfahrende Gerät die Engstelle passieren und reinigen kann. Dem Nutzer wird neben der Engstelle also eine genaue Anleitung vorgegeben, was zu tun ist, um die Engstelle zu beheben und insbesondere hier einen Nicht-Engstellen-Bereich zu schaffen, um ein möglichst vollständiges und/oder optimales Reinigungsergebnis des zu bearbeitenden Bodenbearbeitungsbereichs erzielen zu können.

Bei einer weiteren vorteilhaften Ausführungsform erfolgt das Detektieren von Engstellen und/oder das Ermitteln von Hindernissen über eine Objekterkennung, insbesondere mittels Lidar oder Kamera. Damit kann das mobile, selbstfahrende Gerät ermitteln, welche Hindernisse und/oder Gegenstände die jeweilige Engstelle hervorrufen, um eine Empfehlung zu geben, um wieviel diese Hindernisse und/oder Gegenstände versetzt werden müssen, um dem mobilen, selbstfahrenden Gerät den Zugang zu gewähren. Ist keine Objekterkennung vorhanden, kann das mobile, selbstfahrende Gerät zumindest auf auftretende Engstellen verweisen und dem Nutzer anraten, ein möglicherweise angrenzendes Hindernis, beispielsweise Möbelstück, entsprechend zu verschieben.

Bei einer weiteren vorteilhaften Ausführungsform umfasst das Verfahren den weiteren Verfahrensschritt:
- Integrieren eines noch nicht ermittelten Hindernisses, insbesondere eines noch nicht im Bodenbearbeitungsbereich aufgestellten Hindernisses, in der Umgebungskarte, um anschließend bei dem Aufstellen des Hindernisses im Bodenbearbeitungsbereich eine Engstelle zu vermeiden.

Insbesondere ist es möglich, bei einer Neuanschaffung von Einrichtungsgegenständen, insbesondere Möbeln, die potentielle Hervorrufer von Engstellen sein können, diese noch vor dem Aufstellen im zu bearbeitenden Bodenbearbeitungsbereich in die interaktive Umgebungskarte des mobilen, selbstfahrenden Geräts zu integrieren und am gewünschten Aufstellort digital beziehungsweise virtuell zu platzieren. Ist die virtuelle Neuanschaffung in der Umgebungskarte eingefügt, kann der Nutzer direkt Informationen erhalten, ob die Neuanschaffung dem mobilen, selbstfahrenden Gerät einen Reinigungsweg versperrt oder eine Engstelle hervorruft. Wie bei der Erkundung des Bodenbearbeitungsbereichs kann dem Nutzer eine Hilfestellung gegeben werden, wie die Neuanschaffung zu platzieren ist, sodass das mobile, selbstfahrende Gerät weiterhin alle Bereiche und Stellen des Bodenbearbeitungsbereichs erreichen kann. Dadurch erfolgt eine Zeitersparnis für den Nutzer beim Aufstellen von Neuanschaffungen und dem anschließenden Neueinlernen der Umgebungskarte durch das Feedback der App über den Aufstellort.

Zum Integrieren werden Abmessungen des noch nicht ermittelten Hindernisses ermittelt. Vorzugsweise werden die Abmessungen manuell oder über ein Scannen eines Barcodes des noch nicht ermittelten Hindernisses ermittelt. Weiterhin ist denkbar, die Abmessungen verschiedener Möbelstücke, die im Bodenbearbeitungs- bzw. Wohnbereich platziert werden sollen und somit potentiell zu Hindernissen und/oder Engstellen führen können, über eine Datenbank zu beziehen; hierbei sind die Abmessungen der Möbelstücke innerhalb dieser Datenbank unter anderem beispielsweise durch die Bereitstellung der Abmessungen durch den Möbelhersteller bzw. -vertrieb verfügbar und werden für den Nutzer durch den Anbieter einer App - wie beispielsweise innerhalb der App zur Bedienung des mobilen selbstfahrenden Geräts oder in Verbindung mit einer weiteren App zum Vermessen und Einrichten von Wohnräumen - zur Verfügung gestellt. In diesem Fall kann der Nutzer das Möbelstück über eine Suchfunktion in der App finden und in der innerhalb der App angezeigten, durch das mobile, selbstfahrende Gerät kartieren Umgebungskarte, platzieren. Durch das Ermitteln der Abmessungen kann zuverlässig ein Vorschlag zum Aufstellen neuer Einrichtungsgegenstände erstellt werden, ohne dabei neue Engstellen hervorzurufen.

Bei einer weiteren vorteilhaften Ausführungsform wird das Anzeigen von Maßnahmen zum Beheben der Engstellen visualisiert dargestellt, insbesondere durch Textnachrichten, Symbole, wie beispielsweise Pfeile, und/oder farbliche Codierungen. Beispielweise werden Engstellen oder schwer zugängliche Bereiche als rot markierte Bereiche dargestellt. Texte in der App leiten den Nutzer durch den Prozess zum Beheben dieser Engstelle, beschreiben kritische Bereiche und geben Hinweise und Maßnahmen zum Beheben von Problemstellungen. Pfeile und Hindernisse können beispielsweise visuell aufgeführt sein, um dem Nutzer die Versetzungsrichtung und Länge des notwendigen Versetzens des Hindernisses zu visualisieren.

Erfindungsgemäß umfasst ein Bodenreinigungssystem ein mobiles, selbstfahrendes Gerät, insbesondere Bodenreinigungsgerät zur autonomen Bearbeitung von Bodenflächen wie ein Saug- und/oder Kehr- und/oder Wischroboter, und ein tragbares Zusatzgerät für einen Benutzer, wobei das mobile selbstfahrende Gerät bei einer Explorationsfahrt über einen vorgesehenen Bodenbearbeitungsbereich Engstellen mittels einer Detektionseinrichtung detektiert, diese Engstellen hervorrufende Hindernisse ermittelt, und eine Umgebungskarte des Bodenbearbeitungsbereichs erstellt, wobei Maßnahmen zum Beheben der Engstellen angezeigt sind. Das mobile, selbstfahrende Gerät ist insbesondere dazu geeignet, ein wie oben beschriebenes Betriebsverfahren umzusetzen.

Jegliche Merkmale, Ausgestaltungen, Ausführungsformen und Vorteile das Verfahren betreffend finden auch in Zusammenhang mit dem erfindungsgemäßen Bodenreinigungssystem Anwendung, und umgekehrt.

Die Erfindung wird anhand der nachfolgenden, lediglich Beispiele darstellenden Figuren näher erläutert. Es zeigen:

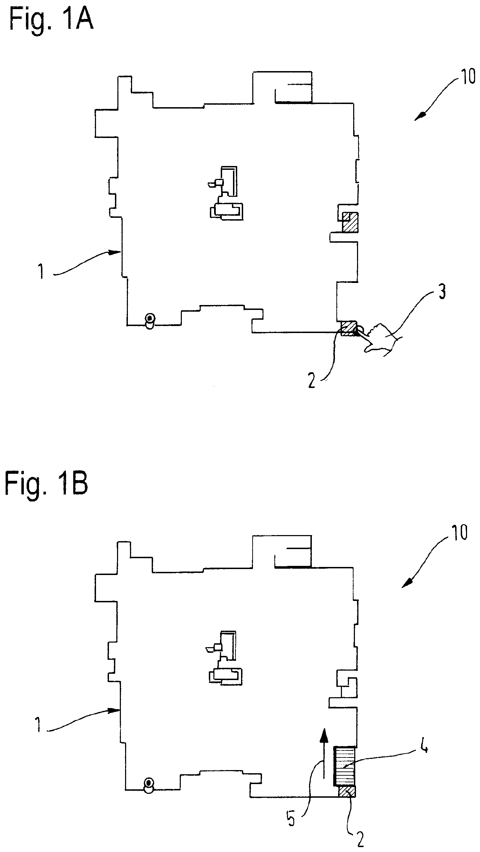

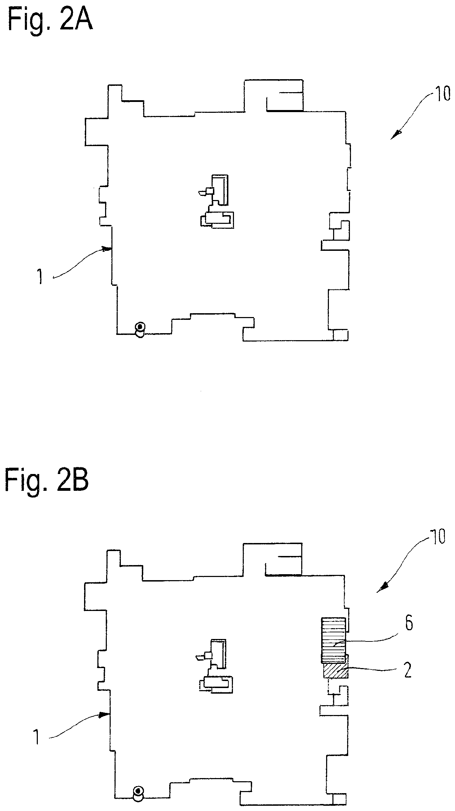

- Figuren 1A, 2A:: je eine schematische Ansicht eines Ausführungsbeispiels einer Umgebungskarte zur Visualisierung eines erfindungsgemäßen Verfahrens zum Betrieb eines mobilen, selbstfahrenden Geräts zur autonomen Bearbeitung von Bodenflächen, insbesondere zum Ermitteln und Visualisieren von Engstellen und dazugehörigen Hindernissen, und
- Figuren 1B, 2B:: je eine schematische Ansicht eines Ausführungsbeispiels einer Umgebungskarte zur Visualisierung eines erfindungsgemäßen Verfahrens zum Betrieb eines mobilen, selbstfahrenden Geräts zur autonomen Bearbeitung von Bodenflächen, insbesondere zum Anzeigen von Maßnahmen zum Beheben der Engstellen.

In den Figuren 1A und 1B ist beispielhaft ein Ablauf einer Aufstellhilfe nach einer Explorationsfahrt eines mobilen, selbstfahrenden Geräts in einem vorgesehenen Bodenbearbeitungsbereich gezeigt. Insbesondere ist ein Display 10 eines tragbaren Zusatzgeräts gezeigt. Auf dem tragbaren Zusatzgerät ist eine Reinigungs-App, installiert, die zur Kommunikation des mobilen, selbstfahrenden Geräts mit dem Zusatzgerät dient und insbesondere eine Visualisierung des Bodenbearbeitungsbereichs, vorliegend eines Wohnraums, ermöglicht. Die App zeigt dem Nutzer dabei vorzugsweise den Wohnraum als Umgebungskarte 1.

Zum Erstellen der Umgebungskarte 1 führt das mobile, selbstfahrende Gerät eine Erkundungsfahrt des Wohnraums durch, mittels der die Umgebungskarte 1 angelegt werden kann. Bei dieser ersten Erkundung kann das mobile, selbstfahrende Gerät den Nutzer insbesondere durch empirisch ermittelte Werte und Fahrverhalten auf mögliche Engstellen 2 im Wohnraum und insbesondere in der interaktiven Umgebungskarte 1 hinweisen, sodass der Nutzer direkt auf diese Engstellen 2 aufmerksam gemacht wird (siehe Figur 1A). Diese Engstellen 2 erlauben dem mobilen, selbstfahrenden Gerät keine Reinigung aufgrund zu enger Platzverhältnisse und daraus resultierend keiner Zugänglichkeit dieser Engstellen 2 durch das mobile, selbstfahrende Gerät. Vorzugsweise werden alle auftretenden Engstellen im vorgesehen Bodenbearbeitungsbereich dargestellt. Beispielsweise sind die Engstellen farblich markiert, vorzugsweise als rot markierter Bereich, insbesondere Rechteck, aufgezeigt. Zusätzlich können entsprechende Texte in der App den Nutzer auf die Engstellen hinweisen und durch die App leiten. Beispielsweise wird in Textform der Nutzer darauf aufmerksam gemacht, dass es in seiner Wohnung Bereiche gibt, die für das mobile, selbstfahrende Gerät schwer oder nicht zugänglich sind. Für nähere Informationen kann auf den entsprechenden roten Bereich beziehungsweise die entsprechende Engstelle 2 geklickt werden (siehe Markierung 3 in Figur 1A).

Zusätzlich kann das mobile, selbstfahrende Gerät, das insbesondere ein Reinigungsroboter ist, mittels einer Objekterkennung, beispielsweise mittels Lidar oder Kamera, ermitteln, welche Hindernisse 4, insbesondere Gegenstände, Einrichtungsgegenstände oder Möbel, die jeweilige Engstelle 2 hervorrufen. Diese Gegenstände, Einrichtungsgegenstände oder Möbel werden ebenfalls in der Umgebungskarte 1 dargestellt, wie es in Figur 1B gezeigt ist.

Zusätzlich wird dem Nutzer beispielsweise visuell durch Symbolik und/oder als Textmitteilung eine Empfehlung gegeben, welche Maßnahme durchgeführt werden können, um die jeweilige Engstelle 2 zu beheben, also insbesondere um dem mobilen, selbstfahrenden Gerät den Zugang zur Engstelle 2 zu gewähren und eine Reinigung dieser Engstelle 2 zu ermöglichen.

Beispielsweise ist das Hindernis 4 in der Umgebungskarte 1 nach Anklicken der entsprechenden Engstelle als blau markierter Bereich dargestellt. Als Maßnahme zum Beheben dieser Engstelle ist ein Pfeil 5 dargestellt, der symbolisch zeigen soll, dass bei einem Verschieben des Hindernisses 4 in Richtung des Pfeils die Engstelle 2 behoben werden kann, damit das mobile, selbstfahrende Gerät diesen Bereich reinigen kann. Zusätzlich ist diese Maßnahme beispielsweise als Textnachricht in der App näher definiert, indem zum Beispiel angeführt ist, dass das Hindernis zur Behebung der Engstelle 2 um 10 cm in Pfeilrichtung zu verschieben ist.

Ist keine Objekterkennung vorhanden, kann das mobile, selbstfahrende Gerät zumindest auf die Engstellen 2 verweisen und dem Nutzer anraten, ein möglicherweise angrenzendes Möbelstück entsprechend zu verschieben.

Die Reinigungs-App zeigt demnach im vorgesehenen Reinigungsbereich die Umgebungskarte 1 mit darin angezeigten Engstellen 2, Hindernissen 4, die die Engstellen 2 hervorrufen, und Maßnahmen 5 zum Beheben der Engstellen an. Insbesondere bietet die Reinigungs-App einen Ablauf für eine digitale Aufstellhilfe von Einrichtungsgegenständen, Möbeln etc. in der Wohnung nach der Erkundungsfahrt an. Texte in der App leiten den Nutzer durch den Ablauf, beschreiben kritische Stellen, insbesondere Engstellen, und geben Hinweise zur Behebung von Problemstellungen, insbesondere dieser Engstellen.

Weiterhin ist es möglich, bei einer Neuanschaffung 6 von Einrichtungsgegenständen, diese noch vor dem Aufstellen in der Wohnung in der interaktiven Umgebungskarte 1 des mobilen, selbstfahrenden Geräts zu integrieren und am gewünschten Aufstellort virtuell zu platzieren, wie es in den Figuren 2A und 2B dargestellt ist. Figur 2A zeigt wiederum das Display 10 des tragbaren Zusatzgeräts, an dem die Umgebungskarte 1 angezeigt wird. Dies ist die Ausgangssituation, um eine Neuanschaffung 6 in der Umgebungskarte einzulesen und virtuell an die vorgesehene Stelle zu positionieren.

Um die Neuanschaffung 6 realitätsnah in der Umgebungskarte 1 einfügen zu können, müssen die Maße der Neuanschaffung 6 erfasst werden. Dies kann entweder manuell durch den Nutzer oder über das Scannen eines Barcodes der Neuanschaffung 6 erfolgen. Nach Eingabe der Maße erscheint die Neuanschaffung 6 im richtigen Größenverhältnis zum Wohnraum in der Umgebungskarte 1. Die virtuelle Neuanschaffung 6 ist in der Umgebungskarte eingefügt, beispielsweise als blau markierter Bereich, und kann durch Platzieren beispielsweise als Touch-Bedienung mit dem Finger, an die gewünschte Stelle platziert werden (siehe Figur 2B). Nach der Platzierung erhält der Nutzer direkt Informationen, ob die Neuanschaffung 6 dem mobilen, selbstfahrenden Gerät einen Weg versperrt oder eine Engstelle 2 hervorruft. Wie bei der Erkundung der Wohnung kann dem Nutzer eine Hilfestellung gegeben werden, wie die Neuanschaffung 6 platziert werden muss, sodass das mobile, selbstfahrende Gerät weiterhin alle Stellen und Bereiche in der Wohnung erreichen und damit reinigen kann, ohne sich dabei festzufahren, stecken zu bleiben oder erst gar nicht passieren zu können.

Zusätzlich zu einer farblichen Markierung sowohl der Engstellen, beispielsweise rot markierte Bereiche, und der Neuanschaffungen, beispielsweise blau markierte Bereiche, können Texte den Nutzer anleiten und Problemsituationen verdeutlichen. Pfeile können bevorzugte Versetzungsrichtungen der Neuanschaffung angeben. Farbliche Bereiche in der App visualisieren die Neuanschaffung 6 und hervorgerufene problematische Engstellen 2. In Figur 2B beispielsweise kann als Textmitteilung angegeben sein, dass bei einem Stellen der Neuanschaffung 6 an den markierten Ort im rot markierten Bereich eine Engstelle 2 entsteht, die für eine Reinigung zu eng ist. Als mögliche Maßnahme kann ein Verschieben der Neuanschaffung 6 um beispielsweise 5 cm nach links in Textform angezeigt sein, sodass das mobile selbstfahrende Gerät zukünftig diesen rot markierten Bereich reinigen kann.

Die Erfindung bietet den Vorteil, dass dem Nutzer ein lästiges "Try and Error" betreffend Einrichtungsgegenstände oder Neuanschaffungen und dadurch bedingte Engstellen in der Wohnung erspart bleiben, sodass die Wohnung für das mobile, selbstfahrende Gerät möglichst vollständig zugänglich gemacht wird und ein Festsitzen aufgrund dieser Engstellen verhindert wird. Engstellen, die einfach behoben werden können, werden angezeigt und können durch empfohlene Maßnahmen verhindert werden. Dadurch erhöht sich die reinigende Abdeckung der Wohnung, womit sich der manuelle Nachreinigungsaufwand durch den Nutzer mit Vorteil verringert. No-Go-Zonen in der Umgebungskarte werden reduziert, wodurch sich die Anzeige in der App verschlankt, übersichtlicher wird und das Handling für den Nutzer vereinfacht. Insbesondere erspart sich der Nutzer Zeit beim Aufstellen von Einrichtungsgegenständen und dem anschließenden Neueinlernen der Umgebungskarte durch das direkte Feedback der App über den Aufstellort. Die Interaktion zwischen Nutzer und mobilen, selbstfahrenden Gerät kann vorteilhafterweise erhöht werden.

## Patentansprüche

1. Verfahren zum Betrieb eines mobilen, selbstfahrenden Geräts, insbesondere eines Bodenreinigungsgeräts zur autonomen Bearbeitung von Bodenflächen wie ein Saug- und/oder Kehr- und/oder Wischroboter, umfassend folgende Verfahrensschritte:
- Durchführen einer Explorationsfahrt des mobilen, selbstfahrenden Geräts in einem vorgesehenen Bodenbearbeitungsbereich,
- Detektieren von Engstellen (2) mittels einer Detektionseinrichtung und Erstellen einer Umgebungskarte (1) des Bodenbearbeitungsbereichs,
- Ermitteln von Hindernissen (4), die die Engstellen hervorrufen, und Darstellen der Engstellen (2) und/oder Hindernisse (4) in der Umgebungskarte (1), **gekennzeichnet durch** ein Anzeigen von Maßnahmen zum Beheben der Engstellen (2), wobei die Maßnahmen eine Aufstellhilfe für Hindernisse (4), insbesondere Einrichtungsgegenstände und/oder Möbel, beinhalten.

2. Verfahren nach Anspruch 1, wobei die Maßnahmen eine Empfehlung für ein Versetzen und/oder Verschieben von Hindernissen (4), insbesondere Einrichtungsgegenstände und/oder Möbel, beinhalten.

3. Verfahren nach Anspruch 2, wobei die Empfehlung eine genaue Angabe, insbesondere Längenangabe beinhaltet, die ein minimal notwendiges Versetzen und/oder Verschieben angibt, um die jeweilige Engstelle (2) zu beheben.

4. Verfahren nach einem der vorhergehenden Ansprüche, wobei das Detektieren von Engstellen (2) und/oder das Ermitteln von Hindernissen (4) über eine Objekterkennung, insbesondere mittels Lidar oder Kamera, erfolgt.

5. Verfahren nach einem der vorhergehenden Ansprüche, mit dem weiteren Verfahrensschritt:
- Integrieren eines noch nicht ermittelten Hindernisses, insbesondere Neuanschaffung (6), und insbesondere eines noch nicht im Bodenbearbeitungsbereich aufgestellten Hindernisses, in der Umgebungskarte (1), um anschließend bei dem Aufstellen des Hindernisses im Bodenbearbeitungsbereich eine Engstelle (2) zu vermeiden, wobei zum Integrieren Abmessungen des noch nicht ermittelten Hindernisses ermittelt werden.

6. Verfahren nach Anspruch 5, wobei die Abmessungen
- manuell, oder
- durch automatisches metrisches Ausmessen durch das mobile, selbstfahrende Gerät, oder
- durch metrisches Vermessen mit einer entsprechenden Smartphone-App, oder
- über ein Scannen eines Barcodes des noch nicht ermittelten Hindernisses ermittelt werden, oder
- bei der Auswahl eines Einrichtungsgegenstands innerhalb einer in dieser oder einer zusätzlichen verknüpften App zur Verfügung gestellten Datenbank von Einrichtungsgegenständen bereitgestellt werden.

7. Verfahren nach einem der vorhergehenden Ansprüche, wobei das Anzeigen von Maßnahmen zum Beheben der Engstellen (2) visualisiert dargestellt wird, insbesondere durch Textnachrichten, Symbole, wie beispielsweise Pfeile, und/oder farbliche Codierungen.

8. Bodenreinigungssystem, umfassend
- ein mobiles, selbstfahrendes Gerät, insbesondere Bodenreinigungsgerät zur autonomen Bearbeitung von Bodenflächen wie ein Saug- und/oder Kehr- und/oder Wischroboter,
- ein tragbares Zusatzgerät für einen Nutzer,
wobei das mobile selbstfahrende Gerät dazu geeignet ist, ein Betriebsverfahren nach einem der vorhergehenden Ansprüche umzusetzen.

## Claims

1. Method for operating a mobile, self-driving device, in particular a floor cleaning device for the autonomous treatment of floor areas such as a vacuuming and/or sweeping and/or mopping robot, comprising the following method steps:
- performing an exploration journey of the mobile, self-driving device in an intended floor treatment region,
- detecting bottlenecks (2) by means of a detection facility and creating an environment map (1) of the floor treatment region,
- ascertaining obstacles (4) that cause the bottlenecks, and representing the bottlenecks (2) and/or obstacles (4) in the environment map (1),
**characterised by** displaying measures for eliminating the bottlenecks (2), wherein the measures include a placement aid for obstacles (4), in particular items of furniture and/or furnishings.

2. Method according to claim 1, wherein the measures include a recommendation for relocating and/or moving obstacles (4), in particular items of furniture and/or furnishings.

3. Method according to claim 2, wherein the recommendation includes a precise indication, in particular an indication of length, which indicates a minimum relocating and/or movement necessary in order to eliminate the respective bottleneck (2).

4. Method according to one of the preceding claims, wherein the detection of bottlenecks (2) and/or the ascertaining of obstacles (4) takes place via an object identification, in particular by means of lidar or camera.

5. Method according to one of the preceding claims, with the further method step:
- integrating an obstacle that has not yet been ascertained, in particular new acquisition (6), and in particular an obstacle that has not yet been placed in the floor treatment region, into the environment map (1), in order to subsequently avoid a bottleneck (2) when placing the obstacle in the floor treatment region, wherein dimensions of the obstacle that has not yet been ascertained are ascertained for the purpose of integration.

6. Method according to claim 5, wherein the dimensions are ascertained
- manually, or
- by way of automatic metric measuring out by the mobile, self-driving device, or
- by way of metric measuring using a corresponding smartphone app, or
- via scanning a barcode of the obstacle that has not yet been ascertained, or
- are provided when selecting an item of furniture within a database of items of furniture made available in this or an additional linked app.

7. Method according to one of the preceding claims, wherein the displaying of measures for eliminating the bottlenecks (2) is represented in a visualised manner, in particular by way of text messages, symbols, such as arrows for example, and/or colour-coding.

8. Floor cleaning system, comprising
- a mobile, self-driving device, in particular floor cleaning device for the autonomous treatment of floor areas such as a vacuuming and/or sweeping and/or mopping robot,
- a portable additional device for a user,
wherein the mobile self-driving device is suitable for implementing an operating method according to one of the preceding claims.

## Revendications

1. Procédé de fonctionnement d'un appareil autonome mobile, en particulier d'un appareil de nettoyage du sol pour un traitement autonome de surfaces du sol, tel qu'un robot aspirateur et/ou de balayage et/ou laveur, comprenant les opérations suivantes :
- exécution d'un trajet d'exploration de l'appareil autonome mobile dans une zone de sol à traiter prévue,
- détection de passages étroits (2) au moyen d'un dispositif de détection et élaboration d'une carte de l'environnement (1) de la zone de sol à traiter,
- détermination des obstacles (4), qui produisent les passages étroits, et représentation des passages étroits (2) et/ou des obstacles (4) dans la carte d'environnement (1),
**caractérisé par** un affichage des mesures pour remédier aux passages étroits (2), dans lequel les mesures contiennent une aide d'agencement pour des obstacles (4), en particulier des accessoires d'ameublement et/ou des meubles.

2. Procédé selon la revendication 1, dans lequel les mesures contiennent une recommandation pour un décalage et/ou un déplacement des obstacles (4), en particulier des accessoires d'ameublement et/ou des meubles.

3. Procédé selon la revendication 2, dans lequel la recommandation contient une indication précise, en particulier une indication de longueur, qui indique un décalage et/ou un déplacement minimal nécessaire pour remédier au passage étroit (2) respectif.

4. Procédé selon l'une des revendications précédentes, dans lequel la détection des passages étroits (2) et/ou la détermination des obstacles (4) s'effectue par le biais d'une détection d'objet, en particulier au moyen d'un lidar ou d'une caméra.

5. Procédé selon l'une des revendications précédentes, comprenant l'opération supplémentaire suivante :
- intégration d'un obstacle non encore déterminé, en particulier d'une nouvelle acquisition (6), et en particulier d'un obstacle qui n'est pas encore installé dans la zone de sol à traiter, dans la carte d'environnement (1), afin d'éviter ensuite lors de l'implantation de l'obstacle dans la zone de sol à traiter un passage étroit (2), dans lequel des dimensions de l'obstacle non encore déterminé sont déterminées pour une intégration.

6. Procédé selon la revendication 5, dans lequel les dimensions sont déterminées :
- manuellement, ou
- par le biais d'une mesure métrique automatique par l'appareil autonome mobile, ou
- par une mesure métrique au moyen d'une application de smartphone correspondante, ou
- par le biais d'un scannage d'un code-barres de l'obstacle non encore déterminé, ou
- sont fournies par la sélection d'un accessoire d'ameublement dans une base de données d'accessoires d'ameublement mise à disposition dans cette application ou une application supplémentaire associée.

7. Procédé selon l'une des revendications précédentes, dans lequel l'affichage de mesures pour remédier aux passages étroits (2) est représenté de façon visualisée, en particulier par des messages textes, des symboles, comme par ex. des flèches et/ou des codages de couleur.

8. Système de nettoyage de sol, comprenant :
- un appareil autonome mobile, en particulier un appareil de nettoyage du sol pour un traitement autonome des surfaces de sol tel qu'un robot aspirateur et/ou de balayage et/ou laveur,
- un appareil auxiliaire portable pour un utilisateur,
dans lequel l'appareil autonome mobile est approprié pour mettre en oeuvre un procédé de fonctionnement selon l'une des revendications précédentes.
